# FASCICULE DE BREVET EUROPEEN

(11) **EP 0 289 444 B1**
(45) Date de publication et mention de la délivrance du brevet: **29.12.1993**
(21) Numéro de dépôt: 88630079.7
(22) Date de dépôt: 22.04.1988
(51) Int. Cl.: B01D 29/11, B01D 29/62

(54) **Appareil de filtration**
Filterapparat
Filter apparatus

(30) Priorité: 27.04.1987 LU 86857
(43) Date de publication de la demande: 02.11.1988
(73) Titulaire: LIQUITECH HOLDING S.A., L-2960 Luxembourg (LU)
(72) Inventeur:
(74) Mandataire: Waxweiler, Jean

(56) Documents cités:
- DE-U- 7 631 815
- US-A- 3 513 981
- US-A- 3 828 932
- US-A- 4 046 692

## Description

La présente invention a pour objet un appareil de filtration comprenant un corps creux divisé en deux chambres par un filtre, corps dans lequel débouche un orifice d'admission du liquide à filtrer et dans lequel ouvre un orifice de sortie du liquide filtré.

L'un des problèmes que posent les appareils de filtration réside dans le fait qu'il faut d'une part éliminer périodiquement les impuretés qui restent en suspension dans la chambre de l'appareil située en amont du filtre, ou qui se déposent sur le fond de cette chambre, et d'autre part procéder, également périodiquement, au décolmatage du filtre, c'est-à-dire au décollement des impuretés qui s'y agglutinent.

On a déjà proposé de procéder à cette double opération en faisant passer un fluide à contre-courant dans l'appareil. Cependant, les moyens mis en oeuvre à cet effet sont généralement extérieurs au filtre, encombrants, peu esthétiques et peu efficaces. Un exemple d'un tel appareil est réprésenté dans US-A-4 046 692. Le preambule de la revendication 1 décrit cet état de la technique.

Le but de la présente invention est de fournir un appareil de filtration dans lequel le rinçage de la chambre amont de l'appareil et le décolmatage puissent s'effectuer à l'aide de moyens entièrement intégrés à l'appareil, ce qui rend celui-ci particulièrement compact, facile à entretenir, fiable, efficace et élégant dans son aspect.

Ce but est atteint grâce aux moyens définis dans la partie caractérisante de la revendication 1.

Le dessin représente, à titre d'exemple, une forme d'exécution de l'objet de l'invention.

La fig. 1 est une coupe axiale d'un appareil de filtration, par exemple de filtration d'eau, dans une position de travail de celui-ci, suivant la ligne I-I de la fig. 2.

La fig. 2 est une coupe transversale de cet appareil suivant la ligne brisée II-II de la fig. 1.

La fig. 3 est une coupe axiale de cet appareil, dans une autre position de travail, suivant la ligne III-III de la fig. 4.

La fig. 4 est une coupe transversale de cet appareil, suivant la ligne brisée IV-IV de la fig. 3.

La fig. 5 est une coupe axiale de cet appareil, dans la même position de travail qu'en fig. 3, suivant la ligne V-V de la fig. 4, et

La fig. 6 en est une coupe transversale, suivant la ligne VI-VI de la fig. 5.

L'appareil représenté comprend un corps formé de trois parties, à savoir un élément de tête 1, une paroi cylindrique 2 et un fond 3, assemblés à l'aide de quatre tirants formés de goujons 4 prenant dans l'élément 1 et qui sont munis d'écrous 5. La paroi latérale 2 est en matière plastique mais elle pourrait être en verre ou en métal, selon la nature du liquide à filtrer, ici de l'eau. Une cartouche filtrante cylindrique 6 logée à l'intérieur de la paroi 2, coaxialement à celle-ci, est serrée axialement entre l'élément de tête 1 et le fond 3. L'élément de tête 1 est venu d'une pièce avec deux tubulures 1a et 1b servant à l'admission et à la sortie, respectivement, du liquide.

L'élément de tête 1 contient un organe distributeur 7 en forme de disque, coaxial à l'appareil, qui se prolonge par une partie cylindrique 7a qui traverse un couvercle 8 fixé à l'élément 1 par huit vis 9. Un ressort à boudin 10 interposé entre le couvercle 8 et le disque 7 presse ce dernier contre une portée plane de l'élément 1 avec interposition d'une garniture d'étanchéité 11, en téflon (marque déposée), par exemple. L'extrémité 7b de la partie cylindrique 7a est de section carrée, ce qui permet de faire tourner, à l'aide d'un volant non représenté, l'organe distributeur 7. L'étanchéité entre la partie cylindrique 7a et un collet 8a que présente le couvercle 8 est assurée par des garnitures d'étanchéité toriques 12. Le collet 8a est percé d'un passage radial 13 dont le but sera indiqué plus loin.

L'organe distributeur 7 présente différentes creusures, passages ou perçages destinés au passage de l'eau, de même que l'élément de tête 1. Ainsi le disque 7 présente une échancrure 14, de forme trapézoïdale, ouvrant sur sa périphérie, un dégagement en forme d'arc de cercle 15 ouvrant sur sa face postérieure, un passage diamétral 16, fermé à ses extrémités par des bouchons vissés 17, deux passages longitudinaux 18 ouvrant tous deux dans le passage 16, un passage longitudinal 19 ménagé dans la partie cylindrique 7a, un passage radial 20 ouvrant dans le passage 19, un dégagement périphérique en arc de cercle 21 et un passage longitudinal 22. Le dégagement 21 sert à la fois au passage du liquide et à limiter la course de l'organe distributeur, étant traversé par une cheville 23 que porte l'élément de tête 1 du corps de l'appareil. Cette cheville empêche en outre la garniture d'étanchéité 11 d'être entraînée en rotation en même temps que l'organe distributeur 7.

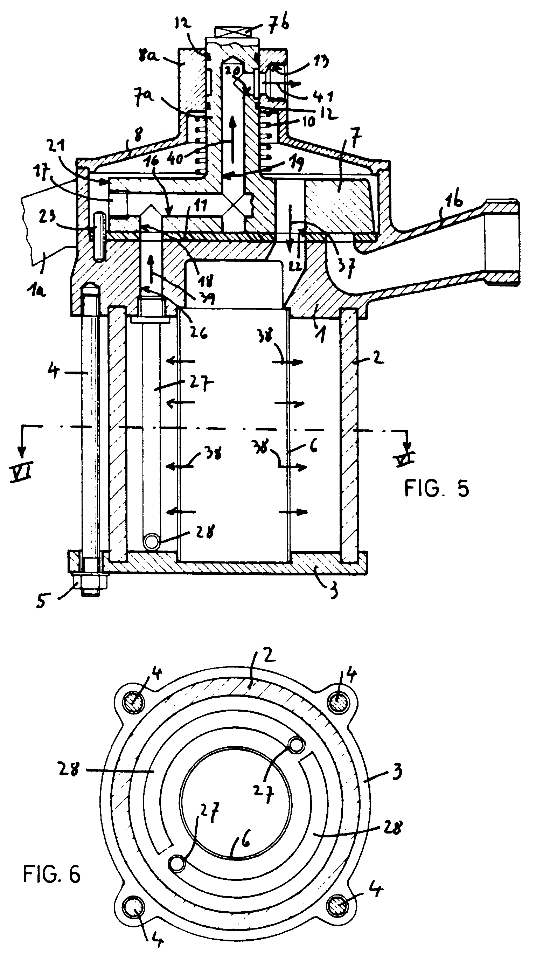

Quant à ce dernier, il est percé d'un passage longitudinal 24, de section rectangulaire, débouchant dans l'espace annulaire compris entre la paroi cylindrique 2 et la cartouche filtrante 6, d'un passage oblique 25 débouchant dans l'espace situé à l'intérieur du filtre 6, et de deux perçages longitudinaux 26 situés à la même distance du centre que les passages 18 du distributeur 7. Deux tubes plongeurs 27 sont vissés par une de leurs extrémités dans les perçages 26 et se terminent chacun par un tube en arc de cercle 28, s'étendant sur un peu moins de 180°, situés dans un plan perpendiculaire à l'axe de l'appareil, contre la paroi du fond 3 de celui-ci (fig. 6). Ces tubes 28 sont percés d'ouvertures en V faisant face au fond 3, non visibles au dessin. Le passage 24 de l'élément de tête 1 est muni d'un aubage 29 qui sert à imprimer un mouvement rotatif hélicoïdal au liquide qui le traverse.

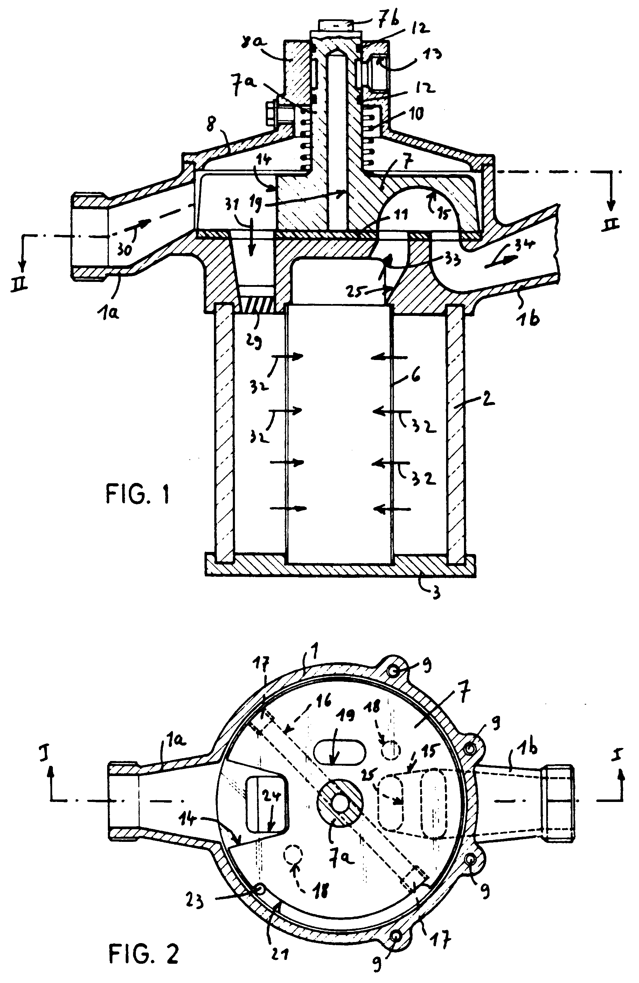

Quant au joint 11, il est percé des lumières nécessaires pour que soient mis en communication les différents passages ménagés dans le distributeur 7 et l'élément de téte 1, d'une façon qui permette le fonctionnement de l'appareil tel que décrit ci-après :
Lorsque l'organe distributeur 7 occupe la posituon représentée aux figs. 1 et 2, à savoir sa position de filtration, l'extrémité gauche (fig. 2) du dégagement en arc de cercle 21 étant en appui contre la cheville de butée 23, l'échancrure 14 de ce distributeur se trouve située en regard du passage 24 de l'élément 1, alors que le dégagement en arc de cercle 15 du distributeur est situé en regard à la fois du passage 25 de l'élément 1 et de l'extrémité de la tubulure 1b. Dans cette position de l'organe distributeur 7, le liquide à filtrer pénètre dans l'élément de tête 1 par la tubulure d'admission 1a (flèche 30) puis, traversant le dégagement 14 du distributeur 7, pénètre dans le passage 24 de l'élément 1 (flèche 31), traverse l'aubage 29 qui lui imprime un mouvement tourbillonnaire, pénètre dans le filtre cylindrique 6 (flèches 32), où il est filtré, quitte l'intérieur du filtre par le passage 25 de l'élément de tête 1 (flèche 33), et passe par le dégagement coudé 15 du distributeur 7 pour pénétrer dans la tubulure de sortie 1b par laquelle il quitte l'appareil (flèche 34).

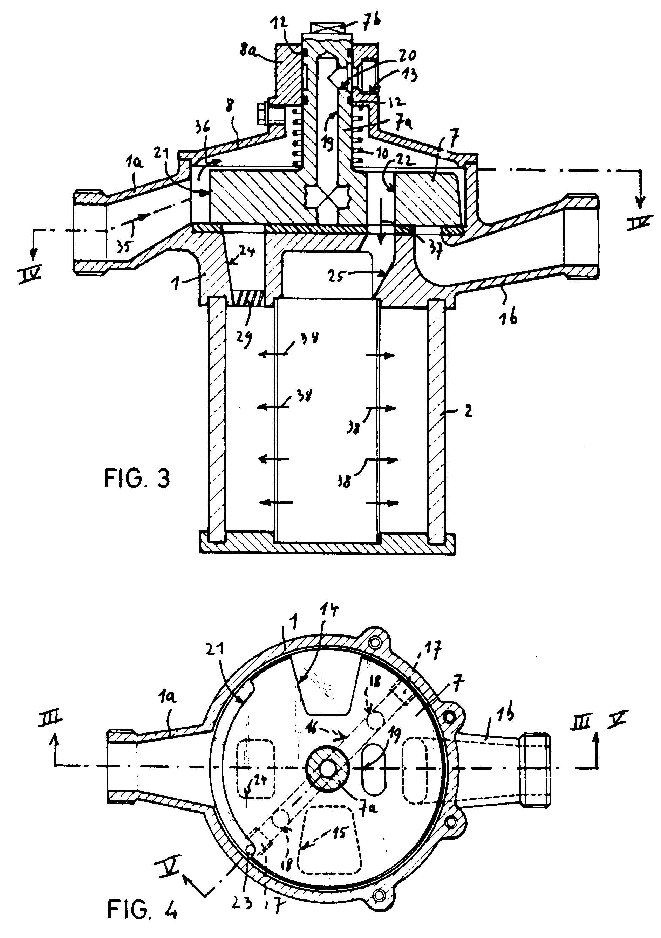

Lorsque, à partir de sa position de filtration, l'organe distributeur 7 est tourné de 90° dans le sens des aiguilles d'une montre, pour occuper sa position dite de rinçage et de décolmatage représentée aux figs. 3, 4 et 5, dans laquelle c'est l'autre extrémité du dégagement en arc de cercle 21 qui est en appui contre la butée d'arrêt 23, le liquide pénètre dans l'appareil par la tubulure d'admission 1a (flèche 35), passe par le dégagement 21 pour pénétrer dans le couvercle 8 (flèche 36), puis traverse le passage axial 22 du distributeur 7 (flèche 37) pour pénétrer à l'intérieur du filtre 6 qu'il traverse ainsi à contre-courant (flèches 38), décolmatant le filtre. Les impuretés détachées du filtre, celles se trouvant en suspension dans le liquide situé à l'extérieur de celui-ci ou encore qui sont déposées au fond de la chambre amont de l'appareil, sont évacuées en même temps que le liquide par les tubes en arc de cercle 28, dans lesquels elles pénètrent par les ouvertures ménagées dans ces derniers, puis sont évacuées par les deux tubes plongeurs 27, par les perçages 26 ménagés dans l'élément de tête 1 (flèche 39), par les perçages 18 du distributeur 7, par le percage radial 16, puis par le perçage axial 19 (flèche 40) et par le perçage radial 20, puis par le passage d'échappement 13 ménagé dans le couvercle 8 (flèche 41).

Le filtre 6 est ainsi décolmaté et l'appareil entièrement rincé des impuretés qu'il contenait.

Afin que, pendant cette opération de décolmatage et de rinçage, aucun liquide non filtré ne s'échappe par la tubulure de sortie 1b, l'entrée de cette dernière est alors fermée par le disque 7 (fig. 3).

Il est à remarquer que si l'appareil est utilisé pour filtrer des eaux très chargées en impuretés, on pourra avoir avantage à utiliser deux appareils afin d'éviter que, lors du rinçage effectué avec ladite eau chargée, des impuretés ne s'accumulent contre le filtre et soient entraînées ensuite dans la tubulure de sortie, lors de la remise en service du filtre. Dans ce cas, les deux filtres seront montés de manière à pouvoir travailler en parallèle lors de la filtration, ou en série lors du rinçage de l'un d'eux, à savoir l'appareil aval, l'appareil amont fonctionnant alors en tant que filtre pré-filtrant l'eau envoyée à l'autre filtre pour le rinçage. Une vanne à plusieurs voies permettrait les différentes fonctions, à savoir filtration avec les deux filtres, montés en parallèle, rinçage de l'un d'eux avec de l'eau prérincée par l'autre, et inversement.

On pourrait même imaginer qu'un seul et même appareil contienne deux cartouches filtrantes et des moyens de distribution du liquide à filtrer permettant les fonctions susmentionnées.

Le présent appareil est très simple, il est compact, élégant dans son aspect, et fiable. En effet, grâce au fait que l'organe distributeur 7 est pressé axialement contre la garniture d'étanchéité 11 par le ressort 10, ce qui absorbe les éventuels effets de l'usure ou du tassement de la garniture d'étanchéité, aucune fuite ne se produit même après un long usage.

Dans l'exemple représenté, l'appareil est destiné à être placé sur une conduite horizontale, son axe étant vertical.

On pourra également, sans que cela nécessite des modifications importantes de l'appareil, le monter sur une conduite verticale, son axe étant horizontal. Dans ce cas, l'un des deux tubes plongeurs 27 sera supprimé, celui qui sera conservé étant placé horizontalement dans le plan vertical passant par l'axe de l'appareil, à la partie inférieure de celui-ci. Le tube 28 qui, dans l'exemple représenté, prolonge le tube 27, sera supprimé et les ouvertures d'accès ménagées dans le tube 27 lui-même.

Le présent appareil pourra être muni d'une cartouche filtrante rotative, ce qui aurait l'avantage d'améliorer l'efficacité de la filtration, par effet de cisaillement, et d'éliminer, par la force centrifuge, les impuretés qui tendraient à s'accumuler sur le filtre et, par conséquent, à le colmater.

## Revendications

1. Appareil de filtration comprenant un corps creux divisé en deux chambres par un filtre (6) et dans lequel débouche un orifice (1a) d'admission du liquide à filtrer et ouvre un orifice (1b) de sortie du liquide filtré, un organe distributeur (7) mobile, actionnable de l'extérieur dudit corps, apte à occuper deux positions de travail, à savoir une position de filtration, dans laquelle il amène (1a) le liquide à filtrer dans la première chambre, que le liquide quitte en traversant le filtre (6), pour pénétrer dans la seconde chambre qu'il quitte, à l'état filtré, par l'orifice (1b) de sortie, et une position de rinçage dans laquelle il amène le liquide pénétrant (1a) dans l'appareil directement dans ladite seconde chambre, le liquide traversant alors le filtre (6) à contresens pour pénétrer dans la première chambre qu'il quitte chargé des impuretés à éliminer, et un orifice d'échappement (13), caractérisé en ce que ledit organe distributeur a un passage axial (24) dans son corps qui relie dans la position de filtration dudit organe distributeur ledit orifice (1a) d'admission à la première chambre, un autre passage axial (22) dans son corps qui relie dans la position de rinçage dudit organe distributeur ledit orifice d'admission (1a) à la seconde chambre, ces deux passages (22,24) n'étant pas en communication entre eux, et un passage d'échappement (18) dans son corps qui relie dans la position de rinçage dudit organe distributeur la première chambre audit orifice d'échappement (13) ménagé à cet effet dans le corps creux; la construction dudit organe distributeur réalisant donc des chemins distincts et séparés pour le liquide à filtrer et le liquide de rinçage dans le corps dudit organe distributeur et permettant de fermer, lorsque cet organe distributeur occupe sa position de filtration, l'orifice d'échappement (13) du liquide de rinçage et de fermer, lorsqu'il occupe sa position de rinçage, l'orifice (1b) de sortie du corps creux.

2. Appareil suivant la revendication 1, caractérisé par le fait que l'organe distributeur (7) est percé de creusures (14;15;22;16,18) pour le passage du liquide.

3. Appareil suivant la revendication 1 ou 2, dans lequel ledit corps a une forme générale cylindrique, le filtre (6) étant également cylindrique, logé dans ledit corps coaxialement à ce dernier, caractérisé par le fait que l'organe distributeur (7) est constitué par une pièce en forme générale de disque, coaxiale audit corps, dans lequel elle est montée rotativement, ce disque se prolongeant par une partie cylindrique (7a) qui traverse une ouverture que présente un couvercle de fermeture (8) dudit corps, par un passage étanche, l'extrémité de ladite partie cylindrique présentant des moyens de prise (7b) permettant d'agir sur l'organe distributeur (7) pour le faire tourner.

4. Appareil suivant la revendication 3, caractérisé par le fait que la partie en forme de disque de l'organe distributeur (7) repose sur une portée du corps cylindrique par l'intermédiaire d'une garniture d'étanchéité (11), un ressort (10) interposé entre l'organe distributeur (7) et ledit couvercle (8) pressant la partie en forme de disque contre ladite garniture d'étanchéité (11).

5. Appareil suivant une des revendications 1 à 4, caractérisé par le fait qu'il comporte un aubage 29 fixe logé dans le passage d'admission du fluide dans ladite première chambre, amenant le liquide à s'engager dans celle-ci en un mouvement hélicoïdal.

6. Appareil suivant la revendication 5, caractérisé par le fait qu'il comprend au moins un tube plongeur (27) s'étendant jusqu'au voisinage du fond de la chambre dans laquelle débouche l'orifice d'admission du liquide à filtrer, et qui capte les impuretés en suspension dans ladite chambre lorsque l'organe distributeur occupe sa position de rinçage.

## Claims

1. Filtration apparatus comprising a vessel divided into two chambers by a filter (6) into which vessel opens an inlet orifice (1a) for liquid to be filtered and from which opens an outlet orifice (1b) for filtered liquid, a moving distributor device (7) actuable from the exterior of said vessel, adapted to take up two working positions, namely a filtration position, in which it allows (1a) the liquid to be filtered into the first chamber, which the liquid leaves by passing through the filter (6), to penetrate into the second chamber which it leaves, in the filtered condition, through the outlet orifice (1b), and a rinsing position in which it allows liquid into (1a) the apparatus directly into the said second chamber, the liquid passing through the filter (6) in the reverse direction to penetrate into the first chamber which it leaves charged with the impurities to be eliminated, and an escape orifice (13) characterised in that said distributor device has an axial passage (24) in its body which in the filtration position of said distributor device connects said inlet orifice (1a) to the first chamber, another axial passage (22) in its body which in the rinsing position of said distributor device connects said inlet orifice (1a) to the second chamber, these two passages (22,24) not being connected to each other, and an escape passage (18) in its body which in the rinsing position of said distributor device connects the first chamber to said escape orifice (13) arranged for this purpose in the vessel; the construction of said distributor device thus allowing distinct and separate paths for the liquid to be filtered and the rinsing liquid in the vessel of said distributor device and allowing the escape orifice (13) for the rinsing liquid to close when the distributor device is in its filtration position and the outlet orifice (1b) from the vessel to close when it is in its rinsing position.

2. Apparatus according to claim 1 characterised in that the distributor device (7) is provided with bores (14;15;22;16;18) for the passage of liquid.

3. Apparatus according to claim 1 or claim 2 in which said vessel has a generally cylindrical form, the filter (6) also being cylindrical, mounted in said vessel coaxially with the latter, characterised in that the distributor device (7) comprises a generally disc-shaped part, coaxial with said vessel, in which it is rotatably mounted, the disc having a cylindrical part (7a) which passes though an opening in a closure cover (8) of said vessel through a water-tight opening, the extremity of said cylindrical part having key means (7b) enabling it to be turned to actuate the distributor device.

4. Apparatus according to claim 3 characterised in that the disc-shaped part of the distributor (7) rests on a part of the cylindrical vessel with an intermediate sealing gasket (11), a spring (10) interposed between the distributor device (7) and the said cover (8) pressing the disc-shaped part against said sealing gasket (11).

5. Apparatus according to any one of claims 1 to 4 characterised in that it comprises a fixed vane situated in the passage admitting fluid into the said first chamber imparting a helical motion of the liquid engaging it.

6. Apparatus according to claim 5 characterised in that it comprises at least one immersed tube (27) which extends to the near bottom of the chamber into which the inlet orifice for liquid to be filtered opens and which captures impurities in suspension in the said chamber when the distributor is in its rinsing position.

## Patentansprüche

1. Filtervorrichtung mit einem Hohlkörper, der durch einen Filter (6) in zwei Kammern unterteilt ist und in den eine Einlaßöffnung (1a) für zu filternde Flüssigkeit mündet und sich eine Ausgangsöffnung (1b) für die gefilterte Flüssigkeit öffnet, einem beweglichen Verteilorgan (7), das von außerhalb des Körpers betätigbar ist und in der Lage ist, zwei Arbeitspositionen einzunehmen, nämlich eine Filterposition, in der es die zu filternde Flüssigkeit in die erste Kammer einläßt (1a), welche die Flüssigkeit verläßt, indem sie den Filter (6) durchquert, um in die zweite Kammer einzudringen, die sie im gefilterten Zustand über die Ausgangsöffnung (1b) verläßt, und eine Spülposition, in der sie die Flüssigkeit, die in die Vorrichtung eintritt (1a), direkt in die zweite Kammer einläßt, wobei die Flüssigkeit dann den Filter (6) in entgegengesetzter Richtung durchquert, um in die erste Kammer einzudringen, die sie beladen mit den zu eliminierenden Verunreinigungen verlaßt, und einer Auslaßöffnung (13), dadurch gekennzeichnet, daß das Verteilorgan einen axialen Durchlaß (24) in seinem Körper hat, der in der Filterposition des Verteilorgans die Einlaßöffnung (1a) mit der ersten Kammer verbindet, einen weiteren axialen Durchlaß (22) in seinem Körper, der in der Spülposition des Verteilorgans die Einlaßöffnung (1a) mit der zweiten Kammer verbindet, wobei diese beiden Durchlässe (22, 24) nicht in gegenseitiger Verbindung sind, und einen Auslaßdurchlaß (18) in seinem Körper, der in der Spülposition des Verteilorgans die erste Kammer mit der Auslaßöffnung (13) verbindet, welche zu diesem Zweck in dem Hohlkörper gebildet ist; wobei der Aufbau des Verteilorgans somit unterschiedliche und getrennte Wege für die zu filternde Flüssigkeit und die Spülflüssigkeit in dem Körper des Verteilorgans ergibt und gestattet, wenn dieses Verteilorgan seine Filterposition einnimmt, die Auslaßöffnung (13) der Spülflüssigkeit zu schließen und, wenn es seine Spülposition einnimmt, die Ausgangsöffnung (1b) des Hohlkörpers zu schließen.

2. Vorrichtung nach Anspruch 1, dadurch gekennzeichnet, daß das Verteilorgan (7) von Ausnehmungen (14; 15; 22; 16, 18) für den Durchtritt der Flüssigkeit durchbrochen ist.

3. Vorrichtung nach Anspruch 1 oder 2, in der der Körper eine insgesamt zylindrische Form hat und der Filter (6) ebenfalls zylindrisch ist und in dem Körper koaxial zu diesem angeordnet ist, dadurch gekennzeichnet, daß das Verteilorgan (7) aus einem Teil besteht, das insgesamt die Form einer Scheibe hat, die zu dem Körper koaxial ist, in welchem sie drehbar gelagert ist, wobei die Scheibe durch einen zylindrischen Teil (7a) verlängert ist, der eine Öffnung, die in einem Verschlußdeckel (8) des Körpers vorgesehen ist, abgedichtet durchquert, wobei das Ende des zylindrischen Teils eine Mitnahmeeinrichtung (7b) aufweist, die gestattet, auf das Verteilorgan (7) einzuwirken, um es zu drehen.

4. Vorrichtung nach Anspruch 3, dadurch gekennzeichnet, daß sich der scheibenförmige Teil des Verteilorgans (7) auf einer Auflagefläche des zylindrischen Körpers über eine Dichtung (11) abstützt, wobei eine Feder (10), die zwischen dem Verteilorgan (7) und dem Deckel (8) angeordnet ist, den scheibenförmigen Teil gegen die Dichtung (11) drückt.

5. Vorrichtung nach einem der Ansprüche 1 bis 4, dadurch gekennzeichnet, daß sie eine feste Beschaufelung (29) aufweist, die in dem Fluideinlaßdurchlaß in der ersten Kammer angeordnet ist und dazu dient, die Flüssigkeit darin in eine schraubenförmige Bewegung zu versetzen.

6. Vorrichtung nach Anspruch 5, dadurch gekennzeichnet, daß sie wenigstens ein Tauchrohr (27) aufweist, das sich bis in die Nähe des Bodens der Kammer erstreckt, in die die Einlaßöffnung für die zu filternde Flüssigkeit mündet, und das die Verunreinigungen auffängt, die in der Kammer in Suspension sind, wenn das Verteilorgan seine Spülposition einnimmt.
